# EUROPEAN PATENT APPLICATION

(11) **EP 4 052 842 A1**
(43) Date of publication of application: **07.09.2022**
(21) Application number: 20882275.9
(22) Date of filing: 28.10.2020
(51) Int. Cl.: B23Q 7/04, B23Q 3/06, B25J 15/00

(54) **WORKPIECE GRIPPING DEVICE**

(30) Priority: 01.11.2019 JP 2019200295
(71) Applicant: Makino Milling Machine Co., Ltd., Tokyo 152-8578 (JP)
(72) Inventor: BABA, Yasunari, Aiko-gun, Kanagawa 243-0303 (JP); ONO, Kouji, Aiko-gun, Kanagawa 243-0303 (JP); ISHII, Masato, Aiko-gun, Kanagawa 243-0303 (JP); MAEDA, Junichi, Aiko-gun, Kanagawa 243-0303 (JP); UENO, Hiroshi, Aiko-gun, Kanagawa 243-0303 (JP)
(74) Representative: McWilliams, David John
(86) International application number: PCT/JP2020/040523
(87) International publication number: WO 2021/085507

(57) **Abstract**

A workpiece gripping device (10) for securing a workpiece (90) on a table 114 of a machine tool (100) is provided with a workpiece gripping unit (20) having at least three claws (12) which are disposed at equal intervals around a central axis (Oc) to secure an outer peripheral part of the workpiece, a bar gripping member (38) which is mounted on the central axis (Oc), and grips a bar (260) inserted into the workpiece (90) along the central axis (Oc), and a retraction mechanism (64) for retracting the bar gripping member (38) along a central axis (O) toward a table side.

## Description

### FIELD

The present invention relates to a workpiece gripping device which secures a workpiece on a machine tool.

### BACKGROUND

During the machining of an impeller of a turbocharger, the securing thereof to the table of a machine tool is difficult because the graspable flange part is thin and fragile. In the machining device described in Patent Literature 1, a workpiece is arranged on a rotary table so that the axis of a rotary feed axis of the machine tool and the axis of an axial hole of the workpiece are aligned, and the workpiece is pressed against and secured on the rotary table with a contact member from above by an upper clamper.

### [CITATION LIST]

### [PATENT LITERATURE]

[PTL 1] Japanese Unexamined Patent Publication (Kokai) No. 2016-87707

### SUMMARY

### [TECHNICAL PROBLEM]

In the machining device described in Patent Literature 1, since the upper clamper presses the upper part of the workpiece, during the machining of the workpiece, there are problems in that the tool path must be selected so that the upper clamper does not interfere with the tool, tool holder, spindle, etc., or it is necessary to increase the tool length to avoid interference, resulting in a decrease in machining efficiency due to insufficient tool rigidity. Furthermore, it is necessary that the upper clamper be provided with an operation mechanism that follows the workpiece, which increases cost, and since it contains precision parts such as bearings, maintenance thereof is required.

The present invention aims to solve such problems of the prior art, and an object thereof is to provide a workpiece gripping device which can easily and reliably secure a workpiece, such as an impeller of a turbocharger, having a fragile portion which is gripped.

### [SOLUTION TO PROBLEM]

In order to achieve the object above, according to the present invention, there is provided a workpiece gripping device for securing a workpiece on a table of a machine tool, the device comprising a workpiece gripping unit which has at least three claws which are arranged at equal intervals about a central axis and which secure an outer peripheral part of the workpiece, a bar gripping unit which is provided on the central axis and which grips a bar inserted into the workpiece along the central axis, and a retraction mechanism which retracts the bar gripping unit along the central axis toward a table side.

Further, according to the present invention, there is provided a machining system for machining a workpiece with a machine tool which comprises a spindle device having a spindle in which a rotary tool is mounted on a tip thereof, and a table which faces the spindle device, the machining system comprising a workpiece exchange device which secures the workpiece gripping device on the table, removes a machined workpiece from the workpiece gripping device, and attaches an unmachined workpiece.

### [ADVANTAGEOUS EFFECTS OF INVENTION]

According to the present invention, in addition to gripping the outer peripheral part of the workpiece, since the bar inserted into the workpiece along the central axis is gripped and is retracted to the table side, even a workpiece such as an impeller of a turbocharger can be easily and reliably secured substantially without worry about interference with the tool.

### BRIEF DESCRIPTION OF DRAWINGS

FIG. 1 is a schematic view showing an example of a machining system by means of a machine tool comprising the workpiece gripping device of the present invention.
FIG. 2 is an enlarged schematic view of a robot hand shown along with a workpiece and a bar inserted into the workpiece.
FIG. 3 is a schematic view showing another example of a machining system by means of a machine tool comprising the workpiece gripping device of the present invention.
FIG. 4 is a schematic view showing an example of a method for removing a bar from a machined workpiece.
FIG. 5 is a schematic cross-sectional view showing a first embodiment of a workpiece gripping device.
FIG. 6 is a schematic cross-sectional view showing a second embodiment of a workpiece gripping device.

### DESCRIPTION OF EMBODIMENTS

The preferred embodiments of the present invention will be described below with reference to the attached drawings.

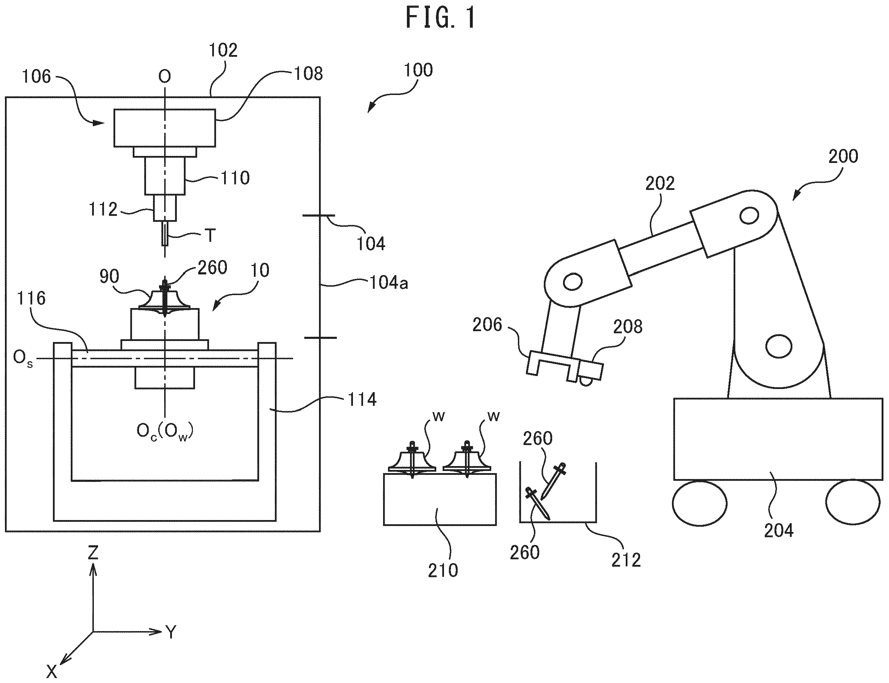

FIGS. 1 shows a machine tool 100 comprising a workpiece gripping device 10 according to a preferred embodiment of the present invention. In FIG. 1, the machine tool 100 is a vertical processing machine comprising a table 114 on which the workpiece gripping device 10 is secured, a spindle device 106 which is arranged so as to face the table 114, a feed axis device (not illustrated) which moves the table 114 and the spindle device 106 relative to each other in the three orthogonal X, Y, and Z axis directions, and two rotary feed axis devices (not illustrated).

The spindle device 106 comprises a spindle 110 which is rotatably supported by a spindle housing 108. The spindle 110 is rotationally driven by a drive motor arranged inside the spindle housing 108 or outside the spindle housing 108. In the spindle 110, a tool mounting hole (not illustrated) is formed in the end surface facing the table 114, and a rotary tool T such as an end mill is mounted in the tool mounting hole via a tool holder 112.

In FIG. 1, the table 114 can be a cradle type table having a workpiece mounting plate 116 provided so as to be pivotable about a pivot axis Os extending in the X-axis direction or the Y-axis direction. The workpiece gripping device 10 which detachably grips a workpiece 90 is secured on the workpiece mounting plate 116. The pivotably-provided workpiece mounting plate 116 is an inversion mechanism of the table 114.

The machine tool 100 can be a machining center comprising a tool magazine (not illustrated) in which a plurality of tools used in machining are stored, an automatic tool exchange device (not illustrated) which exchanges tools between the tool magazine and the spindle 110, and a coolant supply device (not illustrated) which supplies coolant to a machining area of the machine tool 100, and this peripheral equipment is stored in a cover 102 along with the machine tool 100.

The machine tool 100 comprises an NC device which controls the drive motor of the spindle device 106 and the drive motors of the feed axis devices, and a machine controller which controls the peripheral equipment such as the tool magazine, the automatic tool exchange device, and the coolant supply device.

In FIG. 1, the cover 102 has an aperture 104 in one side wall and a door 104a which opens and closes the aperture 104. The aperture 104 is arranged in a position of the machine tool 100 in the cover 102 such that the machining area between the spindle 110 and the table 114 can be accessed from the outside.

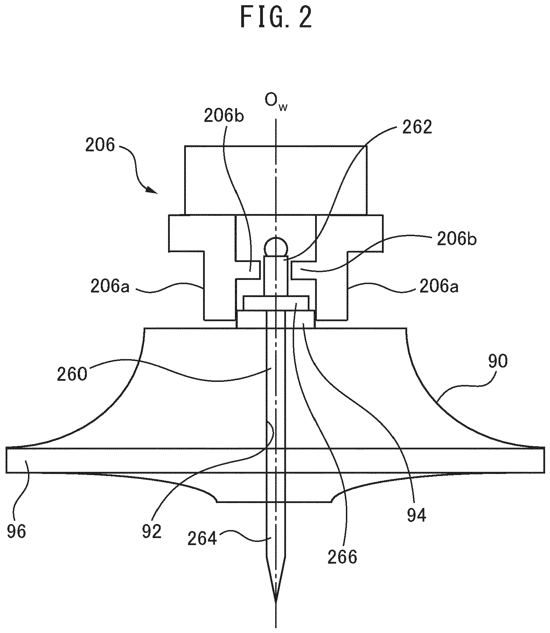

Referring to FIG. 2, the workpiece 90 has a rotationally-symmetrical shape about the central axis Ow, and has a center hole 92 which penetrates along the central axis Ow. Furthermore, the workpiece 90 has a cylindrical boss part 94 protruding in the axial direction at one end, and a thin cylindrical flange part 96 extending in the radial direction on the opposite side of the boss part 94. The flange part 96 has a circular shape when the workpiece 90 is viewed from the axial direction. More specifically, the workpiece 90 can be an impeller on the compression side or the expansion side of a turbocharger. Note that the workpiece 90 may have a shape which does not have a flange part 96.

A workpiece exchange device 200 can be arranged outside the cover 102. In the example of FIG. 1, the workpiece exchange device 200 is formed by a robot mounted on a dolly 204. The robot can be an articulated robot having a robot arm 202. A robot hand 206 having a pair of fingers 206a capable of gripping a part of the workpiece 90 is attached to the tip of the robot arm 202. The pair of fingers 206a are provided so as to be able to approach and separate from each other, and in particular, can grip the boss part 94 of the workpiece 90 in the radial direction. The workpiece exchange device 200 can be controlled by the machine controller of the machine tool 100. Further, the robot hand may be a double hand, whereby unmachined workpieces 90 and machined workpiece 90 may be exchanged simultaneously.

A workpiece station 210 on which a plurality of unmachined workpieces 90 and machined workpieces can be placed can also be arranged outside the cover 102. Further, in the example of FIG. 1, a bar station 212 which holds a plurality of bars 260 is arranged in the vicinity of the workpiece station 210.

Referring to FIG. 2, the bar 260 is a bar-shaped member having a flange part 266 formed between a base end part 262 and a tip end part 264. The bar 260 has a diameter which can be inserted into the center hole 92 of the workpiece 90. The flange part 266 of the bar 260 has a diameter which can engage or abut the end face of the boss part 94 of the workpiece 90 so that the bar 260 does not pass straight through the center hole 92 when the bar 260 is inserted into the center hole 92 of the workpiece 90.

In the present example, the fingers 206a of the robot hand 206 each have a protrusion 206b capable of gripping the base end part 262 of the bar 260. Commercially available blind rivets can be used as the bar 260. Commercially available nails may be used as the bar 260. In this case, the fingers 206a do not include protrusions 206b. Furthermore, the robot hand 206 has a camera 208 for recognizing the positions and orientations of the workpieces 90 mounted in the workpiece station 210 and the bars 260 housed in the bar station 212.

In the examples of FIGS. 1 and 2, the workpiece exchange device 200 can be used to insert a bar 260 from the bar station 212 into an unmachined workpiece 90 mounted on the workpiece station 210. The supply of bars 260 to the bar station 212 can be performed by an operator.

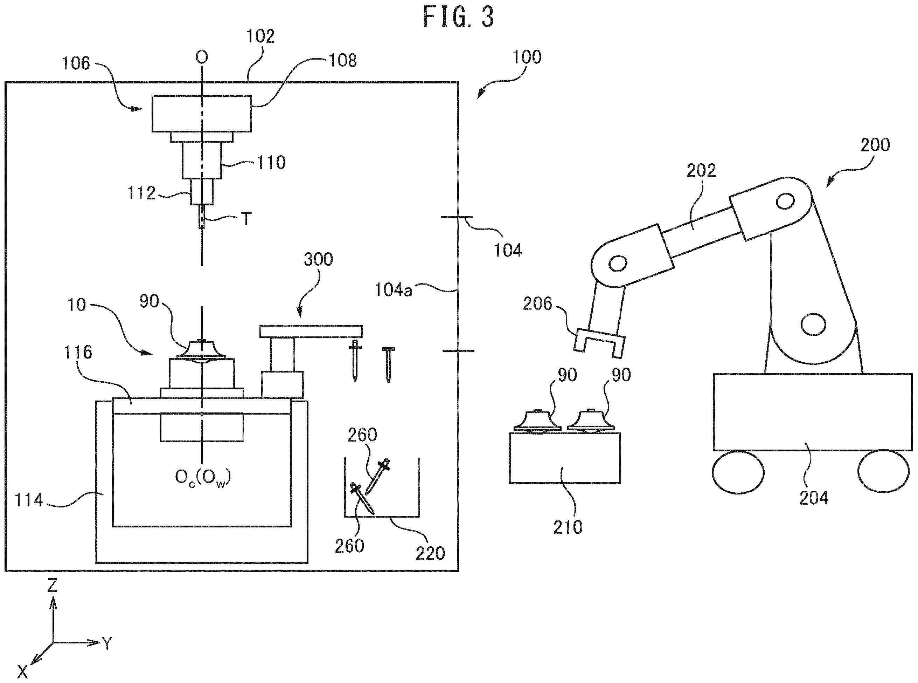

The insertion of a bar 260 into an unmachined workpiece 90 may be performed by a dedicated bar insertion device 300, as shown in FIG. 3, rather than by the workpiece exchange device 200. The bar insertion device 300 can be formed by a robot installed in the cover 102. The bar insertion device 300 grips a bar 260 from the bar station 220 installed in the cover 102, and inserts it into the center hole 92 of an unmachined workpiece 90 mounted on the workpiece gripping device 10. The bar insertion device 300 can be controlled by the machine controller of the machine tool 100.

When the door 104a of the aperture 104 is open after the machining of the workpiece 90 is completed by the machine tool 100, the workpiece exchange device 200 can simultaneously perform the removal and attachment of an unmachined workpiece 90 and a machined workpiece 90 in a short time by a single-rotation operation. The loading of unmachined workpieces 90 into the workpiece station 210 and the unloading of machined workpieces 90 from the workpiece station 210 can be performed by an operator or by an automatic workpiece transport device (not illustrated). The automatic workpiece transport device can be controlled by the machine controller of machine tool 100.

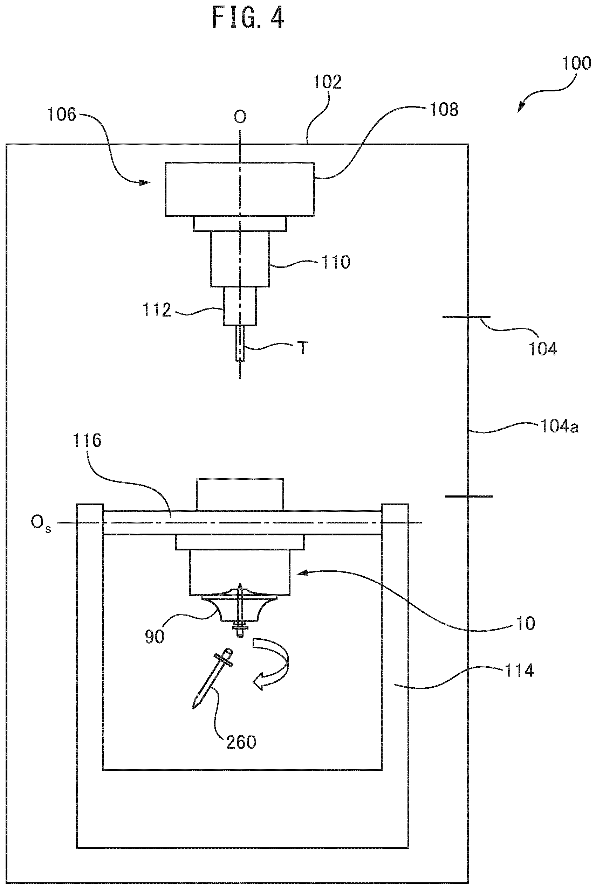

Furthermore, when the machining of the workpiece 90 is complete, as shown in FIG. 4, in a state in which the machined workpiece 90 is gripped by the workpiece gripping device 10, the workpiece mounting plate 116 can be inverted about the pivot axis Os so that the bar 260 can be detached or dropped from the center hole 92 of the workpiece 90. In the machining program provided to the machine tool 100, an M code for rotating the workpiece mounting plate 116 and discarding the bar 260 can be prepared.

The bars 260 accumulated around the table 114 of the machine tool 100 can be collected by the operator on a regular basis. When the bars 260 are formed from the same material as the workpiece 90, they can be discharged to the outside of the machine tool 100 together with the swarf generated when the workpiece 90 is machined.

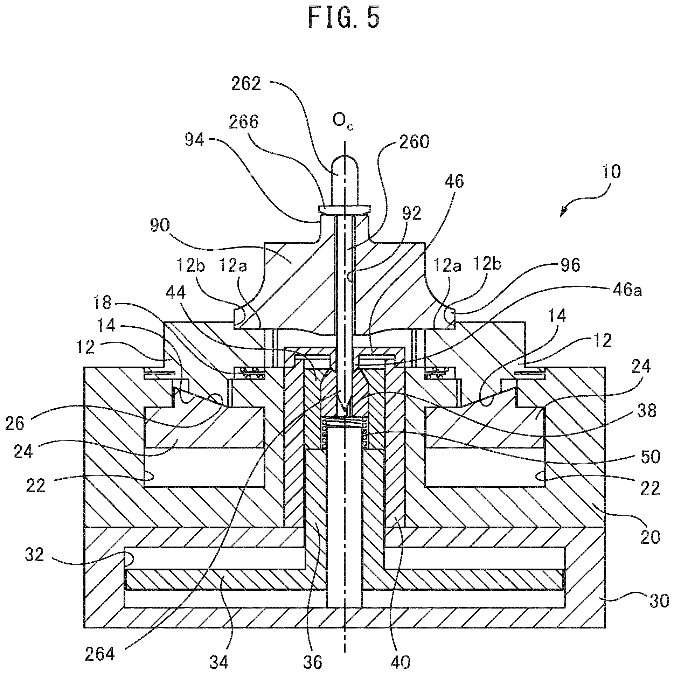

Referring to FIG. 5, the workpiece gripping device 10 has a workpiece gripping unit 20 and a bar gripping unit 30. The workpiece gripping unit 20 has a pressure chamber 22, a pressing member 24, and at least three claws 12. The three claws 12 act as centering so that the central axis Ow of the workpiece 90 is positioned so as to coincide with the central axis Oc of the workpiece gripping unit 20.

The claws 12 are arranged at equal intervals in the circumferential direction about the central axis Oc so as to be capable of reciprocating in the radial direction with respect to the central axis Oc. Each claw 12 has a bearing surface 12a and a contact part 12b. Each bearing surface 12a is composed of a plane perpendicular to the central axis Oc, and the workpiece 90 is placed on the bearing surfaces 12a. Each contact part 12b is composed of a stepped portion rising from the respective bearing surface 12a in the central axis Oc direction, and has a surface which can engage with the outer peripheral part or the outer peripheral surface of the flange part 96 of the workpiece 90. The planes can be formed parallel to the central axis Oc. Each claw 12 also has an inclined surface 14 which is capable of engaging with the pressing member 24.

The pressing member 24 is arranged in the pressure chamber 22 so as to be capable of reciprocating in the axial direction. By pressurizing the space under the pressing member 24 in the pressure chamber 22 by hydraulic pressure or pneumatic pressure, the pressing member 24 moves upward along the central axis Oc, i.e., toward the workpiece 90 gripped by the claws 12. Conversely, by reducing or releasing the pressure in the space below the pressing member 24, or by pressurizing space prepared above the pressing member 24, the pressing member 24 moves downward along the central axis Oc.

The pressing member 24 has an inclined surface 26 facing the inclined surface 14 of the respective claw 12. The inclined surfaces 14 of the claws 12 and the inclined surface 26 of the pressing member 24 are formed in complementary shapes or at the same inclination angle. The inclined surfaces 14, 26 are formed so that the claws 12 move inward in the radial direction with respect to the central axis Oc when the pressing member 24 moves upward along the central axis Oc and engages with the claws 12.

The claws 12 can be attached by a retaining method such as a dovetail groove (not illustrated) extending in the radial direction so that they do not separate from the body portion of the workpiece gripping unit 20 due to the pressing force when the pressing member 24 is engaged. Furthermore, springs 18 for biasing the claws 12 outwardly in the radial direction can be arranged so that the claws 12 can move outwardly in the radial direction when the pressing member 24 separates from the claws 12.

The bar gripping unit 30 is arranged below the workpiece gripping unit 20. The bar gripping unit 30 has a pressure chamber 32, a piston 34, a bar gripping member 38, and an engagement part 46a. The piston 34 is arranged in the pressure chamber 32 so as to be capable of reciprocating in the axial direction. The piston 34 has a shaft part 36 extending along the central axis Oc. The shaft part 36 is slidable with respect to the inner peripheral surface of a hollow sleeve 40 which penetrates the workpiece gripping unit 20 and extends in the axial direction.

By pressurizing the space under the piston 34 in the pressure chamber 32 by hydraulic pressure or pneumatic pressure, the piston 34 moves upward (upwardly) along the central axis Oc, i.e., toward the workpiece 90 gripped by the claws 12, and conversely, by pressurizing the space above the piston 34, the piston 34 moves downward (downwardly) along the central axis Oc.

The bar gripping member 38 is attached to the tip (upper end) of the shaft part 36. A fixture 44 for attaching the bar gripping member 38 so as to be movable in the axial direction without detachment from the shaft part 36 is attached to the tip of the shaft part 36. The fixture 44 is composed of a hollow member, and the bar gripping member 38 is arranged in the interior thereof. The bar gripping member 38 is composed of a hollow member having an inner diameter slightly smaller than the outer diameter of the bar 260 to be gripped, and in particular, the outer diameter of the tip end part 264.

The fixture 44 has the same outer diameter as the shaft part 36 and slides in the axial direction along the inner circumferential surface of the sleeve 40 along with the shaft part 36. The bar gripping member 38 is biased by a spring 50 in a direction away from the shaft part 36 in the axial direction or in a direction approaching the workpiece 90 gripped by the workpiece gripping unit 20. The bar gripping member 38 is also attached by the fixture 44 to the tip of the shaft part 36 so that the center of the inner peripheral surface thereof is aligned with the central axis Oc of the workpiece gripping device 10.

A cap 46 is attached to the upper end of the sleeve 40, and specifically, to the end adjacent to the workpiece 90 gripped by the workpiece gripping device 10. A center hole centered on the central axis Oc of the workpiece gripping device 10 is formed in the cap 46. When the workpiece 90 into which the bar 260 is inserted is gripped by the workpiece gripping device 10, the bar 260 is received in the bar gripping unit 30 through the center hole.

The cap 46 also has an engagement part 46a provided so as to face the bar gripping member 38 centered on the central axis Oc. The engagement part 46a protrudes downward from the lower surface of the cap 46 along the central axis Oc, and is capable of engaging with the tip of the bar gripping member 38 when the bar gripping member 38 moves upward along the central axis O together with the piston 34.

By engaging and pressing with the engagement part 46a, the bar gripping member 38 opens outward in the radial direction, and specifically, the inner diameter is expanded, whereby the bar 260 gripped thereby is opened, or alternatively, the bar 260 inserted into the workpiece 90 gripped by the claws 12 can enter the bar gripping unit 38.

Conversely, by separating from the engagement part 46a, the bar gripping member 38 closes inward in the radial direction, and specifically, the inner diameter is reduced (reduced in diameter), whereby the bar 260 entering the bar gripping unit 38 is gripped or clamped.

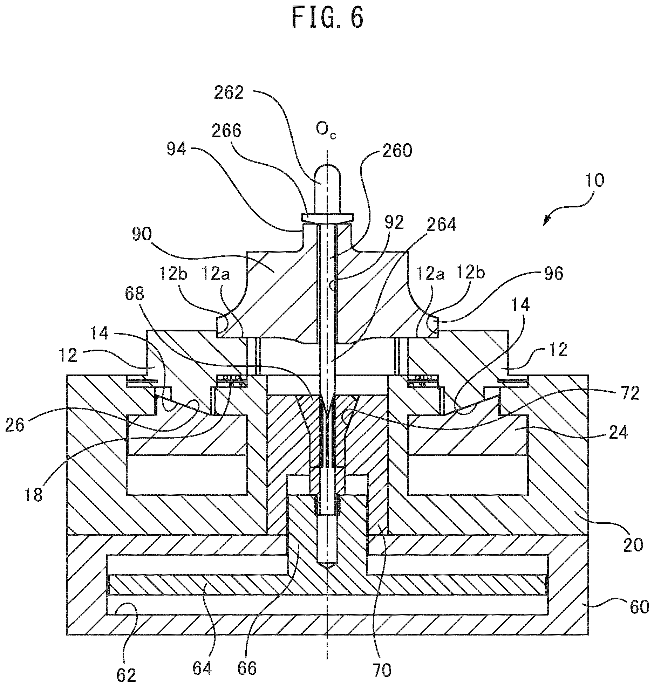

Next, another embodiment of the workpiece gripping device will be described with reference to FIG. 6.

In FIG. 6, the workpiece gripping device 10 has a workpiece gripping unit 20 and a bar gripping unit 60. The workpiece gripping unit 20 is formed in the same manner as the workpiece gripping unit 20 of the workpiece gripping device 10 of FIG. 5, and a detailed description thereof will be omitted below.

The bar gripping unit 60 is located below the workpiece gripping unit 20. The bar gripping unit 60 has a pressure chamber 62, a piston 64, a bar gripping member 68, and a tapered surface 72 as an engagement part. The piston 64 is disposed in the pressure chamber 62 so as to reciprocate in the axial direction. The piston 64 has a shaft part 66 extending along the central axis Oc. The shaft part 66 is slidable with respect to the inner peripheral surface of the hollow sleeve 70 which penetrates the workpiece gripping unit 20 and extends in the axial direction.

By pressurizing the space below the piston 64 in the pressure chamber 62 by hydraulic pressure or pneumatic pressure, the piston 64 moves upward along the central axis Oc, and specifically, moves (upward) toward the workpiece 90 gripped by the claws 12, and conversely, by pressurizing the space above the piston 64, it moves (downward) along the central axis Oc.

The bar gripping member 68 is composed of a collet and is attached to the tip (upper end) of the shaft part 66. The bar gripping member 68 is secured so as not to separate from the shaft part 66 by means such as screwing onto the tip of the shaft part 66.

A tapered surface 72 as an engagement part formed at the tip (upper end) of the sleeve 70 is formed in a tapered shape so that the inner diameter thereof becomes smaller along the central axis Oc in the downward direction, i.e., in the direction away from the workpiece 90 gripped by the workpiece gripping device 10, so as to be engagable with the outer peripheral part of the bar gripping member 68 at the tip of the shaft part 66.

When the piston 64 moves downward, the bar gripping member 68 is engaged with and pressed against the tapered surface 72, then closes inward in the radial direction, and specifically, the inner diameter thereof is reduced (reduced in diameter), whereby the bar 260 entering the bar gripping unit 38 is gripped or clamped. Conversely, when the piston 64 moves upward, the bar gripping member separates from the tapered surface 72, and expands inward in the radial direction, and specifically, the inner diameter thereof expands, which opens the bar 260 gripped thereby, or alternatively, the bar 260 inserted into the workpiece 90 gripped by the claws 12 can enter the bar gripping member 68.

The machine tool 100 can include a pneumatic source (not illustrated) or a hydraulic pressure source (not illustrate) which supplies pneumatic or hydraulic pressure to the workpiece gripping device 10. The pneumatic source can include a compressor (not illustrated) which produces compressed air, a tank (not illustrated) which stores the compressed air, piping between the workpiece gripping device 10 and the tank, and an isolation valve, pressure relief valve, pressure regulating valve, etc., provided in the piping. The hydraulic source can include a tank (not illustrated) which stores hydraulic oil, a pump (not illustrated) which draws and pressurizes hydraulic oil from the tank, piping between the workpiece gripping device 10 and the pump and tank, and an isolation valve, a pressure relief valve, a pressure regulating valve, etc., provided in the piping. The pneumatic or hydraulic source can be controlled by the machine controller of the machine tool 100.

### DESCRIPTION OF REFERENCE SIGNS

- 10: Workpiece Gripping Device
- 12: Claw
- 20: Workpiece Gripping Unit
- 30: Bar Gripping Unit
- 38: Bar Gripping Member
- 60: Bar Gripping Unit
- 68: Bar Gripping Member
- 90: Workpiece
- 92: Center Hole
- 96: Flange Part
- 100: Machine Tool
- 110: Spindle
- 114: Table
- 200: Workpiece Exchange Device
- 202: Robot Arm

## Claims

1. A workpiece gripping device for securing a workpiece on a table of a machine tool, the device comprising:
a workpiece gripping unit which has at least three claws which are arranged at equal intervals about a central axis and which secure an outer peripheral part of the workpiece,
a bar gripping unit which is provided on the central axis and which grips a bar inserted into the workpiece along the central axis, and
a retraction mechanism which retracts the bar gripping unit along the central axis toward the table.

2. The workpiece gripping device according to claim 1, wherein the workpiece presents a rotationally-symmetrical shape about the central axis and has a center hole which penetrates along the central axis, and
the workpiece is axially secured by inserting a bar having a flange part into the center hole, gripping the bar with the bar gripping unit in a state in which the flange part is engaged with an upper surface of the workpiece, and retracting along the central axis toward the table.

3. The workpiece gripping device according to claim 2, wherein each claw of the workpiece gripping unit is provided so as to be capable of reciprocating in the radial direction with respect to the central axis, the workpiece gripping unit has a bearing surface composed of a plane perpendicular to the central axis and on which the workpiece is placed and a contact part formed perpendicular to the bearing surface and engageable with the outer peripheral part of the workpiece, and when each claw is driven inward in the radial direction in a state in which the workpiece is placed on the bearing surface, the outer peripheral part of the workpiece is pressed and gripped in the radial direction by the contact part.

4. The workpiece gripping device according to claim 3, wherein the workpiece is an impeller of a turbocharger having a flange part on one end thereof, and the flange part of the workpiece is gripped by the claws of the workpiece gripping unit.

5. The workpiece gripping device according to claim 1, wherein the bar gripping unit has a bar gripping member which grips a front end of the bar inserted in the center hole of the workpiece, and the retraction mechanism reciprocates the bar gripping member along the central axis.

6. The workpiece gripping device according to claim 5, comprising an engagement part which engages with the bar gripping member in the axial direction and opens and closes the bar gripping member in the radial direction.

7. A machining system for machining a workpiece with a machine tool which comprises a spindle device having a spindle in which a rotary tool is mounted on a tip thereof, and a table which faces the spindle device, the machining system comprising:
the workpiece gripping device according to any one of claims 1 to 6 which is secured on the table, and
a workpiece exchange device which removes a machined workpiece from the workpiece gripping device and attaches an unmachined workpiece.

8. The machining system according to claim 7, further comprising a bar insertion device which inserts the bar into the center hole of an unmachined workpiece.

9. The machining system according to claim 8, wherein the workpiece exchange device inserts the bar into the center hole of an unmachined workpiece.

10. The machining system according to any one of claims 7 to 9, wherein the table has an inversion mechanism which inverts the table so that the bar falls from the center of the workpiece when the bar gripping unit is released.

11. A robot which transports a workpiece and a bar to a machine tool having a workpiece gripping device which inserts the bar into the workpiece and which secures the workpiece to a table by retracting the bar, the robot comprising:
a hand, having:
a workpiece holding unit which holds the workpiece, and
a bar support unit which supports the bar so that the bar does not fall when the workpiece holding unit holds the workpiece.
